# EUROPEAN PATENT SPECIFICATION

(11) **EP 3 085 652 B1**
(45) Date of publication and mention of the grant of the patent: **24.10.2018**
(21) Application number: 14872047.7
(22) Date of filing: 17.12.2014
(51) Int. Cl.: B65H 57/24, C04B 35/48, D01D 11/04, C04B 35/111, C04B 35/486, C04B 35/488, C04B 35/626

(54) **FIBER GUIDE**
FASERFÜHRUNG
GUIDE DE FIBRES

(30) Priority: 17.12.2013 JP 2013260274
(43) Date of publication of application: 26.10.2016
(73) Proprietor: Kyocera Corporation, Kyoto 612-8501 (JP)
(72) Inventor: INUKAI,Shigemune, Kyoto-shi Kyoto 612-8501 (JP); TOYA,Yuuki, Kyoto-shi Kyoto 612-8501 (JP); NAKASUGA,Minoru, Kyoto-shi Kyoto 612-8501 (JP)
(74) Representative: Viering, Jentschura & Partner mbB Patent- und Rechtsanwälte
(86) International application number: PCT/JP2014/083413
(87) International publication number: WO 2015/093531

(56) References cited:
- WO-A1-2012/176777
- JP-A- H0 238 363
- JP-A- S59 138 571
- JP-A- 2003 192 452
- JP-A- 2010 229 570
- JP-A- 2010 229 570

## Description

### Technical Field

The present invention relates to a fiber guide.

### Background Art

In guiding of a fiber in a process of fabricating the fiber, fiber guides having various shapes referred to as an oiling nozzle, a roller guide, a rod guide, and a traverse guide are attached to a textile machine for use. Then, as the construction material for the fiber guides, ceramics excellent in wear resistance is employed.

Then, as such fiber guides, for example, in Patent Literature 1, ceramics having a Vickers hardness HV of 1900 or higher are proposed, and it is described that aluminum oxide and silicon carbide are preferable as particular construction materials.

### Citation List

### Patent Literature

Patent Literature 1: Japanese Unexamined Patent Publication JP-A 2003-213522

Other ceramic fiber guides are described in JP-A 2012-229570 and WO 2012/176777 A1.

### Summary of Invention

### Technical Problem

Recently, fibers having been developed that have various characteristics and functions like water characteristics such as moisture absorption, water absorption, sweat absorption, quick dry, water-repellent, and waterproof and heat characteristics such as far-infrared radiation, heat-storage warmth keeping, and moisture-absorbing heat generation as well as stretch materials, shape-stabilized materials, and the like. Further, in order to obtain a fiber having a desired color, a method has been employed to date that a white fiber is immersed into a dye so that coloring (dyeing) is performed. In such a method, the used dye and the water used for rinsing occur as a waste liquid and cause a problem of large environmental load. In addition, there has been a problem of easy fading and decoloring in such a fiber colored by using a dye.

Thus, in recent years, in order to resolve such problems, base polymer chips in which master chips containing in advance a pigment having a desired color are mixed are employed so that coloring is achieved before fiber spinning. The fiber obtained as such is referred to as a dope dyed yarn. Then, in such a dope dyed yarn, fading and decoloring are not easily caused by friction or daylight and, further, time and effort of dyeing are not necessary. Thus, attention is focused on the dope dyed yarn as a colored yarn which can be fabricated by using a small amount of energy.

Then, in production of a fiber such as a fiber and a dope dyed yarn having various characteristics and functions (collectively referred to as a high-functional chemical fiber, hereinafter), for the purpose of efficiency improvement, the feeding speed is remarkably increased. In such a high-functional chemical fiber where speed improvement is advancing, there has been a problem that the lifetime of a fiber guide fabricated from aluminum oxide becomes shorter by down to 1/10 to 1/50 than in a fiber of the conventional art not having various characteristics and functions so that the replacement frequency of the fiber guide increases and hence the production efficiency decreases.

In view of such a problem, the present inventors expected that a construction material having a high hardness is preferable for the fiber guide used for a high-functional chemical fiber where speed improvement is advancing. Thus, a fiber guide fabricated from silicon carbide, silicon nitride, or a cermet was fabricated and then evaluation was performed thereon. Nevertheless, no preferable result was obtained.

An object of the invention is to provide a fiber guide having an excellent wear resistance against a high-functional chemical fiber.

### Solution to Problem

The present invention provides a fiber guide according to claim 1. Further embodiments are described in the dependent claims.

### Advantageous Effects of Invention

According to the fiber guide according to the embodiment of the invention, an excellent wear resistance against a high-functional chemical fiber is achieved. Thus, the replacement frequency of the fiber guide decreases so that the production efficiency can be improved.

### Brief Description of Drawings

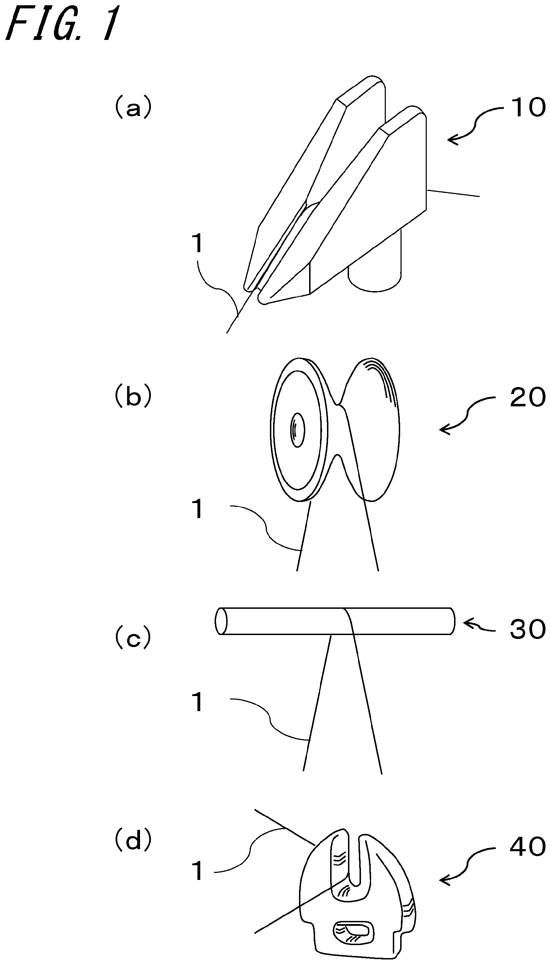

FIG. 1 shows an example of a fiber guide of the present embodiment, wherein FIG. 1 (a) is a perspective view of an oiling nozzle, FIG. 1(b) is a perspective view of a roller guide, FIG. 1(c) is a perspective view of a rod guide, and FIG. 1(d) is a perspective view of a
traverse guide.

### Description of Embodiments

An example of embodiment according to the invention is described below in detail.

FIG. 1 shows an example of a fiber guide of the present embodiment, wherein FIG. 1(a) is a perspective view of an oiling nozzle, FIG. 1(b) is a perspective view of a roller guide, FIG. 1(c) is a perspective view of a rod guide, and FIG. 1(d) is a perspective view of a traverse guide.

Here, an oiling nozzle 10 is used for bringing the fiber 1 posterior to fiber spinning into slide contact therewith so as to adhere oil to the fiber 1. A roller guide 20 is used such as to revolve with guiding the fiber 1 in a V-groove portion. Further, a rod guide 30 is used for converging or separating the fiber 1. A traverse guide 40 is used as a guide at the time when the fiber 1 is wound around the outer periphery of a cylindrical package. Further, the fiber 1 indicates a high-functional chemical fiber such as: a fiber having various characteristics and functions like water characteristics such as moisture absorption, water absorption, sweat absorption, quick dry, water-repellent, and waterproof and heat characteristics such as far-infrared radiation, heat-storage warmth keeping, and moisture-absorbing heat generation as well as stretch materials, shape-stabilized materials, and the like; and a dope dyed yarn colored before fiber spinning. Here, in the following description, when these guides are collectively referred to as a fiber guide, reference numeral "10 to 40" is imparted to the fiber guide.

Each fiber guide 10 to 40 of the present embodiment comprises ceramics containing at least crystal grains of zirconium oxide. Then, an average crystal grain diameter of a crystal grain constituting the ceramics is 1 µm or smaller.

When such a configuration is satisfied, the fiber guide 10 to 40 of the present embodiment has an excellent wear resistance against high-speed sliding of the fiber 1 composed of a high-functional chemical fiber. Then, by virtue of such an excellent wear resistance, the replacement frequency of the fiber guide 10 to 40 decreases so that the production efficiency can be improved.

Here, expected reasons why such an excellent wear resistance can be obtained are: that crystal grains of zirconium oxide are contained and thereby increase the toughness of the ceramics increases so that drop-off of the crystal grains (simply referred to as grain drop-off, in some cases hereinafter) is suppressed; and that since the average crystal grain diameter of the crystal grains constituting the ceramics is 1 µm or smaller, even when the crystal grains drop off, the opening area of each grain drop-off portion is smaller than the thickness of the fiber 1 and hence wear does not easily progress with starting at the grain drop-off portion. In contrast, when crystal grains of zirconium oxide are not contained, drop-off of the crystal grains cannot be suppressed and hence wear progresses rapidly. Further, when the average crystal grain diameter of the crystal grains constituting the ceramics exceeds 1 µm, the fiber 1 easily enters the opening of the grain drop-off portion and hence wear progresses rapidly.

Here, as the crystal grains other than zirconium oxide, aluminum oxide is preferable from the perspectives of the firing temperature at the time of forming the ceramics and of a mechanical property to be obtained. Here, as the mass ratio of zirconium oxide and aluminum oxide, when the total of the ZrO₂-equivalent amount of Zr and the Al₂O₃-equivalent amount of Al is premised to be 100 mass%, it is preferable that the ZrO₂-equivalent amount of Zr is 60 mass% or greater.

Here, as for the presence or absence of crystal grains of zirconium oxide and crystal grains of aluminum oxide, measurement is performed by using an X-ray diffractometer (XRD) and then identification is performed on the obtained X-ray chart by using JCPDS cards so that the presence or absence can be checked. Further, the presence or absence can be also checked by mirror-finishing the ceramics and then observing it by using a scanning electron microscope (SEM) with a magnification of 5000× to 10000× and then performing energy dispersive X-ray analysis (EDS) provided in the SEM. Here, the crystal grains of zirconium oxide and the crystal grains of aluminum oxide can be identified on the basis of a color difference. Then, when zirconium (Zr) and oxygen (0) are detected in a particular crystal grain by EDS, the presence of crystal grains of zirconium oxide can be concluded. Further, when aluminum (Al) and oxygen (0) are detected in a particular crystal, the presence of crystal grains of aluminum oxide can be concluded.

Further, the average crystal grain diameter can be obtained by mirror-finishing the ceramics and then adopting a surface which is thermally etched within a temperature range lower than the firing temperature by 50 to 100°C, as a measurement surface so as to be photographed by using the SEM with a magnification of 5000× to 10000×, then inputting the obtained photographic image to image analysis software (e.g., Image-Pro Plus fabricated by Planetron, Inc.) so that the contours of crystal grains are traced and scanned, and then performing analysis with conditions of gray scale and 300 dpi.

Next, in the fiber guide 10 to 40 of the present embodiment, it is preferable that the maximum of the equivalent circle diameter of the crystal grains is smaller than 1 µm. When such a configuration is satisfied, a compressive stress difference acting between the crystal grains owing to the difference in the crystal grain size becomes small so that grain drop-off does not easily occur. Further, since the opening area of the grain drop-off portion becomes smaller, a more excellent wear resistance against a high-functional chemical fiber is achieved. Here, the maximum of the equivalent circle diameter of the crystal grains can be acquired by a method similar to the above-mentioned method of acquiring the average crystal grain diameter of the crystal grains.

Next, in the fiber guide 10 to 40 of the present embodiment, it is preferable that the total of contents of zirconium oxide, hafnium oxide and an oxide of a component which stabilizes the zirconium oxide is 98 mass% or greater based on 100 mass% total of all components constituting the ceramics.

As such, when the total of contents of zirconium oxide, hafnium oxide and an oxide of a component which stabilizes the zirconium oxide is 98 mass% or greater based on 100 mass% total of all components constituting the ceramics, almost all crystal grains present in the ceramics are crystal grains of zirconium oxide. Thus, the ceramics satisfying the above-mentioned configuration has a higher toughness than ceramics not satisfying the above-mentioned configuration and hence drop-off of the crystal grains becomes more difficult to occur so that an excellent wear resistance against a high-functional chemical fiber is achieved.

Here, it is more preferable that the total of contents of zirconium oxide, hafnium oxide and an oxide of a component which stabilizes the zirconium oxide is 99 mass% or greater based on 100 mass% total of all components constituting the ceramics.

Here, the hafnium oxide is an oxide of hafnium. Then, hafnium belongs to the same group IVa as zirconium and hence has similar chemical properties to zirconium. Thus, hafnium is difficult to be separated from zirconium and hence is frequently contained in a zirconium oxide material. For example, when the total of the ZrO₂-equivalent amount of Zr and the HfO₂-equivalent amount of Hf is premised to be 100 mass%, hafnium oxide is contained in approximately 2 mass% in terms of the HfO₂-equivalent amount of Hf.

Further, for example, employable ones of the oxide of a component which stabilizes the zirconium oxide include yttrium oxide, calcium oxide, magnesium oxide, cerium oxide, dysprosium oxide, silicon oxide, and titanium oxide. For example, in a case of yttrium oxide, the content of yttrium oxide is approximately 2.0 mol% or greater and 3.0 mol% or smaller in a total of 100 mol% of zirconium oxide and yttrium oxide.

Further, in the fiber guide 10 to 40 of the present embodiment, it is preferable that the standard deviation of equivalent circle diameters of the crystal grains is 0.1 or smaller. When such a configuration is satisfied, the compressive stress difference acting between the crystal grains owing to the difference in the crystal grain size becomes yet smaller. Thus, grain drop-off becomes more difficult to occur and hence a more excellent wear resistance against a high-functional chemical fiber is achieved. Here, the standard deviation of the equivalent circle diameters in the crystal grains can be acquired by a method similar to the above-mentioned method of acquiring the average crystal grain diameter of the crystal grains.

Next, in the fiber guide 10 to 40 of the present embodiment, it is preferable that the content of silicon oxide in SiO₂ equivalent is 0.05 mass% or greater and 0.5 mass% or smaller based on 100 mass% total of all components constituting the ceramics.

When the above-mentioned configuration is satisfied, at the time of formation of the ceramics, a glass phase containing silicon oxide formed in a grain boundary occupies merely a small fraction. Thus, the mechanical property can be improved by a sintering acceleration effect without degradation in the wear resistance.

Here, the content of each component constituting the ceramics can be acquired by, for example, acquiring the contents of Zr, Al, and Si by using an ICP (inductively coupled plasma) emission spectrometer (ICP) or an X-ray fluorescence analyzer (XRF) and then converting the obtained values into ZrO₂, Al₂O₃, and SiO₂ equivalent values, respectively.

Next, an example of a fabrication method for fiber guide of the present embodiment is described below.

First, in a case of matrix ceramics of zirconium oxide and aluminum oxide, powder of zirconium oxide and powder of aluminum oxide are prepared as main materials. In a case of zirconium-oxide based ceramics, powder of zirconium oxide is prepared as a main material. Here, in the powder of zirconium oxide, hafnium oxide and an oxide of a component which stabilizes the zirconium oxide may be contained. Further, powder of aluminum oxide, powder of silicon oxide, and the like are prepared as auxiliary materials serving as a sintering aid and an additive.

Then, predetermined amounts of the main materials and the auxiliary materials are weighed out and adopted as a starting material. Then, the starting material together with a solvent and balls is put into a mill and then pulverized so as to become an average grain size where a desired average crystal grain diameter is obtained. As a result, a slurry is obtained. Then, a binder is added to the obtained slurry. After that, the slurry is sprayed and dried into the form of granules by using a spray dryer. Here, the average grain size can be acquired by using a grain size distribution measuring device.

Then, the granules are put into a mechanical press machine and then a pressure is applied so that the granules are formed into a predetermined shape. After that, cutting or otherwise is performed so that a shaped article of desired shape is obtained. Here, the shaped article may be fabricated by an injection molding method by employing a pellet fabricated from the same starting material.

Then, for example, in a case where matrix ceramics of zirconium oxide and aluminum oxide is the main material, the obtained shaped article is fired in air atmosphere at a temperature not causing excessive grain growth in the crystal grains, for example, at a maximum temperature of 1400 to 1600°C. Further, in a case where zirconium oxide is the main material, firing is performed in air atmosphere at a temperature not causing excessive grain growth in the crystal grains, for example, at a maximum temperature of 1380 to 1500°C. Here, in each case, it is sufficient that the holding time at the maximum temperature is 0.5 to 8 hours.

Further, it is preferable that hot isotropic pressing (HIP) is performed after the firing described above. Then, the obtained sintered compact is finished by barrel polishing so that a fiber guide of the present embodiment can be obtained.

Here, in order to render the maximum of the equivalent circle diameter of the crystal grains smaller than 1 µm, after the pulverization in the mill, it is sufficient that particles having a diameter exceeding 0.9 µm is removed by using a filter in a case where grain growth of approximately 10% is expected in grain growth in the crystal grains at the time of firing.

Further, in order to render the total of contents of zirconium oxide, hafnium oxide and an oxide of a component which stabilizes the zirconium oxide 98 mass% or greater based on 100 mass% total of all components constituting the ceramics, in a case where the powder of zirconium oxide serving as the main material contains hafnium oxide and an oxide of a component which stabilizes the zirconium oxide, it is sufficient that the auxiliary materials are set to be smaller than 2 mass% and the remaining part is composed of powder of zirconium oxide. In a particular example of such zirconium oxide powder, hafnium oxide is in 0.5 to 2.5 mass%, then when the component which stabilizes the zirconium oxide is yttrium (Y), the Y₂O₃ equivalent amount is 3.5 to 6.0 mass%, and then the remaining part is zirconium oxide.

Further, in order to render the standard deviation of equivalent circle diameters of the crystal grains 0.1 or smaller, it is sufficient that after the grain size distribution is checked at the time of measurement of the average grain size performed after the pulverization in the mill, selection is performed by using a filter. Specifically, it is sufficient that particles exceeding the average grain size + 0.25 µm are removed. Then, in a case where the ceramics is zirconium-oxide based ceramics in which the total of contents of zirconium oxide, hafnium oxide and an oxide of a component stabilizing the zirconium oxide is 98 mass% or greater based on 100 mass% total of all components constituting the ceramics and particles exceeding the average grain size + 0.25 µm have been removed, the grain diameter posterior to the pulverization becomes substantially the same as the size of the crystal grains in the ceramics when the firing is performed with a maximum temperature lower than 1400°C where excessive grain growth is not caused. By virtue of this, the compressive stress homogeneously acts between the crystal grains present in the ceramics so that ceramics in which grain drop-off does not easily occur can be formed.

Further, in order to render the content of silicon oxide 0.05 mass% or greater and 0.5 mass% or smaller based on 100 mass% total of all components constituting the ceramics, it is sufficient that the content of silicon oxide powder is set to be within a range of 0.05 mass% or greater and 0.5 mass% or smaller based on 100 mass% total of the starting material.

The fiber guide thus obtained has an excellent wear resistance against high-speed sliding of a high-functional chemical fiber. Further, the excellent wear resistance brings reduction of the replacement frequency of the fiber guide and hence improves the production efficiency.

Examples of the invention are described below in detail. However, the invention is not limited to these examples.

### Example 1

Zirconium-oxide based ceramics each having a composition and an average crystal grain diameter listed in Table 1 were fabricated and then wear resistance tests were performed.

First, powder of zirconium oxide was prepared as a main material. Here, in the employed zirconium oxide powder, when the total of the ZrO₂-equivalent amount of Zr and the HfO₂-equivalent amount of Hf was premised to be 100 mass%, 2 mass% of hafnium oxide in the HfO₂-equivalent amount of Hf and 3 mol% of yttrium oxide serving as a stabilizing agent were contained. Further, powder of aluminum oxide was prepared.

Then, a starting material obtained by weighing out the contents of the individual components constituting the zirconium-oxide based ceramics listed in Table 1 was, together with a solvent and balls, put into a mill and then pulverized into a desired average grain size so that a slurry was obtained. Then, a binder was added to the obtained slurry. After that, the slurry was sprayed and dried into the form of granules by using a spray dryer. Here, measurement of the average grain size was performed by using a grain size distribution measuring device.

Then, the granules were put into a mechanical press machine and then a pressure was applied so that the granules were formed into a predetermined shape. After that, cutting or otherwise was performed so that a shaped article of desired shape was obtained.

Then, each obtained shaped article was held in air atmosphere at a firing temperature (the maximum temperature) listed in Table 1 for 2 hours so that firing was achieved. After that, barrel polishing was performed so that fiber guides of samples Nos. 1 to 10 were obtained.

Then, qualitative analysis by an XRF was performed on each obtained sample and then quantitative analysis by an ICP was performed on the detected components. Then, the oxide-equivalent values are respectively listed in Table 1. Here, the field "content total of other components" in Table 1 lists the total of the oxide-equivalent values of the components other than Zr, Hf, Y, and Al.

Further, each obtained sample was mirror-finished. Then, the obtained surface was thermal-etched at a temperature lower than the firing temperature by 50°C and then adopted as a measurement surface so as to be photographed by using an SEM with a magnification of 10000×. The obtained photographic image was inputted to image analysis software (Image-Pro Plus manufactured by Planetron, Inc.) so that the contours of crystal grains were traced and scanned and then analysis was performed with conditions of gray scale and 300 dpi. As a result, the average crystal grain diameter and the maximum of the equivalent circle diameter were acquired.

Further, measurement was performed on each sample by using the XRD and then identification was performed on the basis of the obtained X-ray chart by using the JCPDS cards. As a result, it has been checked that crystal grains of zirconium oxide were present in the samples Nos. 2 to 10 and crystal grains of zirconium oxide were absent in the sample No. 1.

Then, a wear resistance test that a dope dyed yarn was slid on each sample at a velocity of 800 m per minute was continued for 7 days and then the width and the depth of the wear mark were checked so that evaluation and ranking were performed. Here, in the evaluation ranking, the smaller value indicates the more satisfactory wear resistance. The results are listed in Table 1.

**[Table 1]**

| Sample No. | Firing temperature (°C) | Content total of ZrO₂, HfO₂, and Y₂O₃ (mass%) | Al₂O₃ content (mass%) | Content total of other composition (mass%) | Average crystal grain diameter (µm) | Maximum of equivalent circle diameter (µm) | Wear resistance ranking |
|---|---|---|---|---|---|---|---|
| 1 | 1500 | 0 | 99.5 | 0.5 | 1.00 | 2.00 | 10 |
| 2 | 1540 | 50 | 49.5 | 0.5 | 1.20 | 2.00 | 9 |
| 3 | 1520 | 50 | 49.5 | 0.5 | 1.00 | 2.00 | 8 |
| 4 | 1520 | 60 | 39.5 | 0.5 | 0.60 | 1.50 | 7 |
| 5 | 1520 | 70 | 29.5 | 0.5 | 0.50 | 1.20 | 6 |
| 6 | 1500 | 80 | 19.5 | 0.5 | 0.45 | 1.10 | 5 |
| 7 | 1450 | 95 | 4.5 | 0.5 | 0.43 | 1.00 | 4 |
| 8 | 1420 | 95 | 4.5 | 0.5 | 0.40 | 0.90 | 3 |
| 9 | 1400 | 98 | 1.5 | 0.5 | 0.35 | 0.75 | 2 |
| 10 | 1380 | 99 | 0.5 | 0.5 | 0.25 | 0.60 | 1 |

As seen from Table 1, in the sample No. 1, the width of the wear mark was widest and the depth was deepest. Further, in the sample No. 2, although not exceeding those of the sample No. 1, the width of the wear mark was wider and the depth was deeper than in the samples Nos. 3 to 10. In contrast, in the samples Nos. 3 to 10, the width of the wear mark was narrowly and the depth was shallow. Further, in the samples Nos. 7 and 8, the sample No. 8 had a narrower width of the wear mark and a shallower depth. Further, in particular, in the samples Nos. 9 and 10, the width of the wear mark was narrow and the depth was shallow.

As seen from these results, when a fiber guide comprises ceramics containing at least crystal grains of zirconium oxide and the average crystal grain diameter of the crystal grains constituting the ceramics is 1 µm or smaller, a fiber guide having an excellent wear resistance can be obtained. Further, a configuration that the maximum of the equivalent circle diameter of the crystal grains is smaller than 1 µm has been recognized as preferable. Further, it has been recognized that a fiber guide having an excellent wear resistance can be obtained. Further, a configuration that the total of the contents of zirconium oxide, hafnium oxide and an oxide of a component that stabilizes the zirconium oxide is 98 mass% or greater based on 100 mass% total of all components constituting the ceramics has been recognized as more preferable.

### Example 2

Next, samples were fabricated by employing a starting material similar to that of the sample No. 9 in Example 1 and by employing different average grain sizes and different firing temperatures (maximum temperatures). Then, wear resistance tests were performed. Here, a sample No. 11 was similar to the sample No. 9 in Example 1.

First, the starting material, a solvent, and balls were put into a mill and then pulverized so as to become a predetermined average grain size. Then, in samples Nos. 12 and 13, particles exceeding 0.5 µm were removed by using a filter. Then, by using a grain size distribution measuring device, the average grain size posterior to the pulverization was measured in the sample No. 11 and the average grain size posterior to the filter passing was measured in the samples Nos. 12 and 13.

Then, a binder was added to the slurry. After that, the slurry was sprayed and dried into the form of granules by using a spray dryer. After that, the granules were put into a mechanical press machine and then a pressure was applied so that the granules were formed into a predetermined shape. After that, cutting or otherwise was performed so that a shaped article of desired shape was obtained.

Then, each obtained shaped article was held in air atmosphere at a firing temperature listed in Table 2 for 2 hours so that firing was achieved. After that, barrel polishing was performed so that fiber guides of the samples Nos. 11 to 13 were obtained.

Then, qualitative analysis by the XRF was performed on each obtained sample and then quantitative analysis by the ICP was performed on the detected components. As a result, in each of the samples Nos. 11 to 13, the total of the contents of ZrO₂, HfO₂, and Y₂O₃ was 98 mass%, the content of Al₂O₃ was 1.5 mass%, and the total of the contents of the other components was 0.5 mass%.

Further, the average crystal grain diameter of equivalent circle diameters and the standard deviation of equivalent circle diameters were acquired by a method similar to that of acquiring the average crystal grain diameter of equivalent circle diameters in Example 1. Further, by a method similar to that of Example 1, wear resistance tests were performed so that an evaluation ranking was acquired. The results are listed in Table 2.

**[Table 2]**

| Sample No. | Average grain size (µm) | Firing temperature (°C) | Average crystal grain diameter (µm) | Standard deviation of equivalent circle diameters | Wear resistance ranking |
|---|---|---|---|---|---|
| 11 | 0.30 | 1400 | 0.35 | 0.11 | 3 |
| 12 | 0.25 | 1400 | 0.35 | 0.09 | 2 |
| 13 | 0.25 | 1380 | 0.25 | 0.09 | 1 |

As seen from Table 2, a configuration that the standard deviation of equivalent circle diameters of the crystal grains is 0.1 or smaller is preferable with respect to the wear resistance.

### Example 3

Next, samples each having a composition listed in Table 3 were fabricated and then their densities were measured as evaluation of the mechanical property and wear resistance tests were performed. Here, in the points other than the composition, a fabrication method similar to that of the sample No. 10 in Example 1 was employed so that fiber guides of the samples Nos. 14 to 18 were obtained.

Then, qualitative analysis by the XRF was performed on each obtained sample and then quantitative analysis by the ICP was performed on the detected components. Then, the oxide-equivalent values are respectively listed in Table 3.

Further, the density measurement was performed in accordance with JIS R1634-1998 and then a ranking was generated in descending order of density value. Further, by a method similar to that of Example 1, wear resistance tests were performed so that an evaluation ranking was acquired. The results are listed in Table 3.

**[Table 3]**

| Sample No. | Content total of ZrO₂, HfO₂, and Y₂O₃ (mass%) | Al₂O₃ content (mass%) | SiO₂ content (mass%) | Content total of other composition (mass%) | Density ranking | Wear resistance ranking |
|---|---|---|---|---|---|---|
| 14 | 99 | 0.4 | 0.6 | 0 | 5 | 5 |
| 15 | 99 | 0.5 | 0.5 | 0 | 2 | 3 |
| 16 | 99 | 0.5 | 0.3 | 0.2 | 1 | 1 |
| 17 | 99 | 0.5 | 0.05 | 0.45 | 3 | 2 |
| 18 | 99 | 0.5 | 0.03 | 0.47 | 4 | 5 |

As seen from Table 3, when the content of silicon oxide is 0.05 mass% or greater and 0.5 mass% or smaller in SiO₂ equivalent based on 100 mass% total of all components constituting the ceramics, the mechanical property is improved by a sintering acceleration effect without degradation in the wear resistance.

### Reference Signs List

1: Fiber
10: Oiling nozzle
20: Roller guide
30: Rod guide
40: Traverse guide

## Claims

1. A fiber guide (10, 20, 30, 40) comprising ceramics containing at least crystal grains of zirconium oxide, wherein a total of contents of zirconium oxide, hafnium oxide and an oxide of a component which stabilizes the zirconium oxide is 98 mass% or greater based on 100 mass% total of all components constituting the ceramics, an average crystal grain diameter of a crystal grain constituting the ceramics being 1 µm or smaller.

2. The fiber guide (10, 20, 30, 40) according to claim 1, wherein a maximum of equivalent circle diameter of the crystal grains is smaller than 1 µm.

3. The fiber guide (10, 20, 30, 40) according to claim 1 or 2, wherein a standard deviation of equivalent circle diameters of the crystal grains is 0.1 or smaller.

4. The fiber guide (10, 20, 30, 40) according to any one of claims 1 to 3, wherein a content of silicon oxide is 0.05 mass% or greater and 0.5 mass% or smaller based on 100 mass% total of all components constituting the ceramics.

## Patentansprüche

1. Eine Faserführung (10, 20, 30, 40), die Keramik aufweist, die mindestens Kristallkörner von Zirkoniumoxid enthält, wobei ein Gesamtgehalt an Zirkoniumoxid, Hafniumoxid und einem Oxid eines Bestandteils, der das Zirkoniumoxid stabilisiert, 98 Masse-% oder mehr basierend auf insgesamt 100 Masse-% aller Bestandteile ist, die die Keramik ausbilden, wobei ein durchschnittlicher Kristallkorndurchmesser eines Kristallkorns, das die Keramik ausbildet, 1 µm oder kleiner ist.

2. Die Faserführung (10, 20, 30, 40) gemäß Anspruch 1, wobei ein maximaler flächengleicher Kreisdurchmesser der Kristallkörner kleiner als 1 µm ist.

3. Die Faserführung (10, 20, 30, 40) gemäß Anspruch 1 oder 2, wobei eine Standardabweichung von flächengleichen Kreisdurchmessern der Kristallkörner 0,1 oder weniger ist.

4. Die Faserführung (10, 20, 30, 40) gemäß irgendeinem der Ansprüche 1 bis 3, wobei ein Gehalt an Siliciumoxid 0,05 Masse-% oder mehr und 0,5 Masse-% oder weniger basierend auf insgesamt 100 Masse-% aller Bestandteile ist, die die Keramik ausbilden.

## Revendications

1. Un guide de fibres (10, 20, 30, 40) comportant une céramique contenant au moins des grains de cristal d'oxyde de zirconium, dans lequel un total des teneurs en oxyde de zirconium, oxyde de hafnium et un oxyde d'un composant qui stabilise l'oxyde de zirconium est 98 % en masse ou plus reposant sur un total de 100 % en masse de tous les composants constituant la céramique, un diamètre moyen de grains de cristal d'un grain de cristal constituant la céramique étant 1 µm ou moins.

2. Le guide de fibres (10, 20, 30, 40) selon la revendication 1, dans lequel un maximum de diamètre circulaire équivalent des grains de cristal est inférieur à 1 µm.

3. Le guide de fibres (10, 20, 30, 40) selon la revendication 1 ou 2, dans lequel un écart type de diamètres circulaires équivalents des grains de cristal est 0,1 ou moins.

4. Le guide de fibres (10, 20, 30, 40) selon l'une quelconque des revendications 1 à 3, dans lequel une teneur en oxyde de silicium est 0,05 % en masse ou plus et 0,5 % en masse ou moins reposant sur un total de 100 % en masse de tous les composants constituant la céramique.
